# EUROPEAN PATENT SPECIFICATION

(11) **EP 3 353 611 B1**
(45) Date of publication and mention of the grant of the patent: **29.10.2025**
(21) Application number: 16847100.1
(22) Date of filing: 12.09.2016
(51) Int. Cl.: G05B 19/18, G01V 99/00, G01V 20/00, G06F 30/20, G06F 111/10

(54) **SOLUTION DEPENDENT OUTPUT TIME MARKS FOR MODELS OF DYNAMIC SYSTEMS**
LÖSUNGSABHÄNGIGE AUSGABEZEITMARKEN FÜR MODELLE DYNAMISCHER SYSTEME
REPÈRES TEMPORELS DE SORTIE DÉPENDANT DE LA SOLUTION POUR DES MODÈLES DE SYSTÈMES DYNAMIQUES

(30) Priority: 14.09.2015 US 201562218341 P
(43) Date of publication of application: 01.08.2018
(73) Proprietor: Baker Hughes Holdings LLC, Houston, TX 77073 (US)
(72) Inventor: HOEINK, Tobias, Houston, TX 77210-4740 (US)
(74) Representative: Novagraaf Group
(86) International application number: PCT/US2016/051222
(87) International publication number: WO 2017/048613

(56) References cited:
- WO-A1-2015/006363
- US-A1- 2002 099 504
- US-A1- 2006 149 518
- US-A1- 2006 277 509
- US-A1- 2010 325 075
- US-A1- 2013 248 250
- US-A1- 2014 122 047
- US-A1- 2015 081 264
- AL-MUKHTAR A M ET AL: "Simulation of the Crack Propagation in Rocks Using Fracture Mechanics Approach", JOURNAL OF FAILURE ANALYSIS AND PREVENTION, SPRINGER, BOSTON, vol. 15, no. 1, 6 January 2015 (2015-01-06), pages 90 - 100, XP035433879, ISSN: 1547-7029, [retrieved on 20150106], DOI: 10.1007/S11668-014-9907-2
- WENWEI XUE ET AL: "Pattern-based event detection in sensor networks", DISTRIBUTED AND PARALLEL DATABASES, vol. 30, no. 1, 4 November 2011 (2011-11-04), NL, pages 27 - 62, XP055572621, ISSN: 0926-8782, DOI: 10.1007/s10619-011-7087-6

## Description

### BACKGROUND

Modeling and simulation techniques are widely used to analyze and evaluate various dynamic systems. For example, simulations are utilized in the energy industry to design, monitor and evaluate energy industry operations such as drilling, exploration, reservoir evaluation, stimulation and production operations. Models of formations, reservoirs and production systems can be utilized for planning as well as utilized in conjunction with downhole and/or surface measurements to assist in predicting and forecasting stimulation and production performance, which is important for effective reservoir management and control.

WO2015/006363 discloses determining hydraulic fracture performance attributes of a subterranean volume based on a model.

US 2014/122047 discloses a method of monitoring and predicting measurement data for a borehole.

Al-Mukhtar A M et al: "Simulation of the Crack Propagation in Rocks Using Fracture Mechanics Approach", Journal of Failure Analysis and Prevention, Springer, Boston, vol. 15, no. 1, 6 January 2015, pages 90-100, XP035433879, ISSN: 1547-7029, DOI: 10.1007/S11668-014-9907-2 discloses simulating crack propagation in brittle rock under different conditions.

### SUMMARY

The present invention provides a computer implemented method of simulating a dynamic system as claimed in claim 1. The present invention also provides a system for simulating a dynamic system as claimed in claim 8.

A computer implemented method of simulating a dynamic system includes
receiving input data and applying the input data to a numerical forward model, and
executing the forward model to simulate the dynamic system and generate solution data values. The method also includes, during execution of the forward model, comparing the solution data values to a pre-selected criterion. The method further includes, in response to at least one solution data value satisfying the pre-selected criterion, automatically generating a time mark for a time at which the at least one solution data value satisfied the pre-selected criterion and automatically outputting one or more solution data values associated with the time mark.

An embodiment of a system for simulating a dynamic system includes a data collection device configured to receive input data related to the dynamic system, and a processing device. The processing device is configured to perform a method that includes applying the input data to a numerical forward model, executing the forward model to simulate the dynamic system and generate solution data values, and, during execution of the forward model, comparing the solution data values to a pre-selected criterion. The method also includes, in response to at least one solution data value satisfying the pre-selected criterion, automatically generating a time mark for a time at which the at least one solution data value satisfied the pre-selected criterion and automatically outputting the one or more solution data values associated with the time mark.

### BRIEF DESCRIPTION OF THE DRAWINGS

The following descriptions should not be considered limiting in any way. With reference to the accompanying drawings, like elements are numbered alike:
FIG. 1 depicts an embodiment of a processing system;
FIG. 2 depicts an embodiment of a stimulation and/or hydrocarbon production system;
FIG. 3 depicts an example of variable values calculated via a modeling or simulation system, and exemplary time marks used for generating output data;
FIG. 4 depicts an example of highly dynamic behavior calculated by the modeling or simulation system of FIG. 3;
FIG. 5 is a flow diagram depicting aspects of a method of modeling or simulating a dynamic system; and
FIG. 6 depicts solution-dependent time marks generated in response to highly dynamic behavior of a variable calculated via a modeling or simulation system according to embodiments described herein.

### DETAILED DESCRIPTION OF THE INVENTION

Systems and methods are described herein for performing aspects of numerical forward simulations or other types of simulations or models of dynamic systems. An embodiment of a method includes running or executing a forward simulation or model of a system and generating outputs in response to highly dynamic events. The simulation or model is run over a selected time window, and time marks or time stamps are set that cause a set of data (e.g., a variable value or set of variable values) to be output from the simulation. The method includes automatically generating a solution-dependent time mark or stamp in response to detection of a highly dynamic event, when a variable changes at a rate exceeding a selected threshold. The solution-dependent time marks are not pre-set prior to running the model, but are generated in response to occurrence of the highly dynamic event.

Embodiments described herein increase the efficiency of simulation or modeling systems by identifying and outputting simulation data that is targeted to highly dynamic events or changes. Such embodiments avoid generating irrelevant data and reduce or eliminate the need for performing subsequent simulations, which represents a significant improvement in computing time and performance of computer systems running simulations and models.

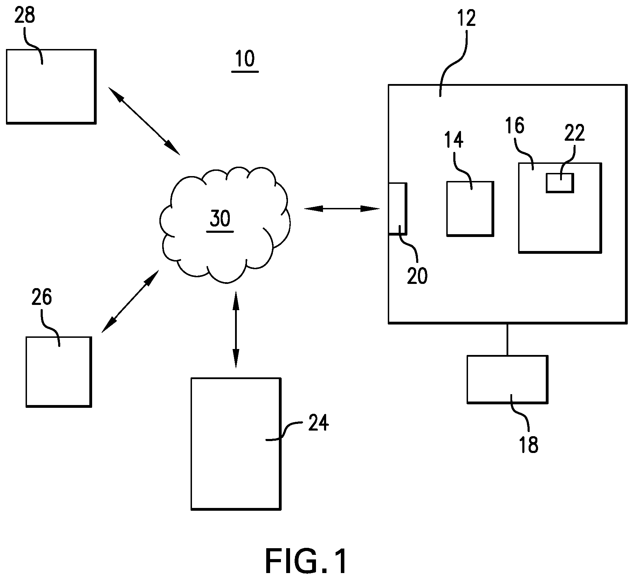

FIG. 1 illustrates an embodiment of a data collection, processing and/or analysis system 10, which can be used to perform aspects of modeling and simulation according to embodiments described herein. The system 10 includes a processing device or unit 12 such as a computer (e.g., desktop or laptop PC, smartphone, tablet, etc.), which includes suitable display and interface components to allow a user to input data for processing, modeling, simulation and/or analysis. For example, the processing unit 12 includes a processor 14, memory 16, a display unit 18 and input/output interface(s) 20. The memory 16 stores input data and programs or instructions for executing various processing operations, such as a modeling or simulation program or program suite 22. The processing unit 12 may be connected to a host processor 24, such as a server or mainframe.

The processing unit 12 and/or host 24 are connected to various data storage locations, which may be internal or external to the processing unit 12 and/or host 24. For example, the processing unit 12 is connected to data sources from which input data relating to dynamic systems can be collected. The data sources relate to energy industry operations, such as hydrocarbon exploration and production operations. For example, the processing unit 12 is connected to one or more databases 26 that store energy industry data such as reservoir data, information regarding various oil rigs or other systems, well logs and other measurement data, production data and others. The processing unit 12 is connected to a dynamic system 28 such as a drilling, measurement and/or production system. The processing unit 12 and/or host 24 may also be connected to a network 30 such as the Internet to allow for retrieval of information from any suitable external sources that can be used to collect data useful for modeling or simulation.

Data collected from such sources may be considered input data used in a modeling or simulation method. The data may be pre-existing stored data relating to a dynamic system such as a hydrocarbon reservoir, earth formation and/or borehole during drilling, measurement and/or production. In one embodiment, the data is real time data collected from an operation and/or formation that allows for modeling, simulation, updating simulations or calibrating simulations in real time. As described herein, "real-time" or "real time" refers to performance during or proximate in time to an energy industry operation system or other dynamic system, which may include receiving data generated upon or shortly after detection and/or acquisition by sensors or other monitoring devices. The received data may then be used in order to assess performance of the operation and/or modify operational parameters during the operation.

A "dynamic" system is any system in which one or more parameters or properties change over time. A dynamic system has a state that may change over time and can be modeled or simulated (at least approximately) by calculating values of one or more variables representing the state of the system at a plurality of times.

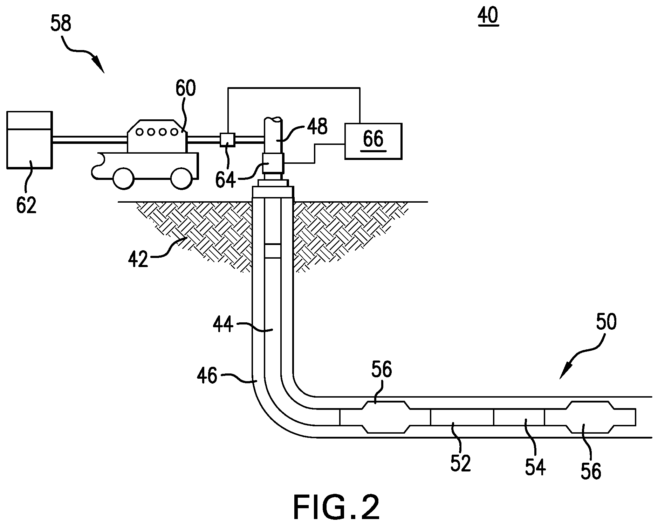

FIG. 2 illustrates an example of a dynamic system that can be simulated or modeled according to embodiments described herein. A hydrocarbon production and/or stimulation system 40 is configured to produce and/or stimulate production of hydrocarbons from an earth formation 42. A borehole string 44 is disposed in a borehole 46 that penetrates the formation 42. The borehole 46 may be an open hole, a cased hole or a partially cased hole. In one embodiment, the borehole string 44 is a stimulation or injection string that includes a tubular, such as a coiled tubing, pipe (e.g., multiple pipe segments) or wired pipe, that extends from a wellhead 48 at a surface location (e.g., at a drill site or offshore stimulation vessel). As described herein, "string" refers to any structure or carrier suitable for lowering a tool or other component through a borehole or connecting a drill bit to the surface, and is not limited to the structure and configuration described herein. The term "carrier" as used herein means any device, device component, combination of devices, media and/or member that may be used to convey, house, support or otherwise facilitate the use of another device, device component, combination of devices, media and/or member. Exemplary nonlimiting carriers include casing pipes, wirelines, wireline sondes, slickline sondes, drop shots, downhole subs, BHAs and drill strings.

The system 40 is configured as a hydraulic stimulation system. As described herein, "hydraulic stimulation" includes any injection of a fluid into a formation. A fluid may be any flowable substance such as a liquid or a gas, and/or a flowable solid such as sand. In this embodiment, the string 44 includes a stimulation assembly 50 that includes one or more tools or components to facilitate stimulation of the formation 42. For example, the string 44 includes a fracturing assembly 52, such as a fracture or "frac" sleeve device, and/or a perforation assembly 54. The string 44 may also include additional components, such as one or more isolation or packer subs 56. One or more of the stimulation assembly 50, the fracturing assembly 52, the perforation assembly 54 and/or packer subs 56 may include or be connected to suitable electronics or processors configured to communicate with a surface processing unit and/or control the respective tool or assembly.

An injection system 58 is employed to stimulate the formation 42. The injection system 58 includes an injection device such as a high pressure pump 60 in fluid communication with a fluid tank 62, mixing unit or other fluid source or combination of fluid sources. The pump 60 injects fluid into the string 44 or the borehole 46 to introduce fluid into the formation 42, for example, to stimulate and/or fracture the formation 42.

A variety of sensors or measurement devices may be incorporated into the system 40 at surface and/or downhole locations for measurement of properties of the formation, borehole string and the stimulation and/or production operation. For example, one or more flow rate and/or pressure sensors 64 are disposed in fluid communication with the pump 60 and the string 44 for measurement of fluid characteristics.

Other examples of sensors or measurement devices include parameter sensors configured for formation evaluation measurements relating to the formation, the borehole, geophysical characteristics and/or borehole fluids. These sensors may include formation evaluation sensors (e.g., resistivity, dielectric constant, water saturation, porosity, density and permeability), sensors for measuring geophysical parameters (e.g., acoustic velocity and acoustic travel time), and sensors for measuring borehole fluid parameters (e.g., viscosity, density, clarity, rheology, pH level, and gas, oil and water contents).

A processing and/or control unit 66 is disposed in operable communication with the sensors 64, the pump 60, the stimulation system 50, other sensors and/or other components of the system 40. The processing and/or control unit 66 is configured to receive, store and/or transmit data generated from sensors and components, and includes any number of suitable components, such as processors, memory, communication devices and power sources.

A processor or processing system, such as the processing unit 12 or the surface processing unit 66, is configured to perform a forward simulation or modeling process that estimates or predicts various aspects of a dynamic system. The embodiments described herein may be applicable to any kind of dynamic system for which modeling or prediction is desired. The dynamic system is a system related to energy industry operations.

For example, the processor executes instructions or algorithms to simulate aspects of an earth formation and/or hydrocarbon production operation, such as reservoir properties (i.e., formation properties), operational parameters and production properties. An exemplary simulation includes one or more forward models that incorporate partial differential equation models for, e.g., subsurface multi-phase flow, which can be used to estimate formation, borehole and production properties (e.g., oil, gas and/or water rates from single and multi-zonal well systems) and predict or forecast such properties based on measurement data.

The simulation is used to collect information such as production performance characteristics, bottomhole pressures, formation pressures, transient reservoir pressure-temperature response, permeability and water saturation. The simulation may provide information related to tool or component performance, such as strain, directional characteristics, temperature, vibration, tool wear and others.

Input data used for executing the simulation may incorporate information from industry databases, data collected from previous measurements of the formation or a similar formation, and data from an operator specifying parameters such as the type of operation, borehole geometry and trajectory, equipment setup, expected formation fluids and operational parameters such as injected fluids, pumping schemes and operational times. Real time measurement data may be input to the simulation from surface and/or downhole sensor devices such as permanent downhole gauges, distributed temperature sensors, distributed acoustic sensors and/or production logging tools.

When the simulation is executed, one or more variables representing the state of a system or parts of a system are calculated over various time frames. The time frames may be pre-selected time frames or variable time frames. The values of such variables over time are calculated and may be presented to a user or processor as output data. Output data may be produced not only at the end of a simulation (e.g., at the end of a time window for which simulation is performed), but also during the simulation. Typically, output data is generated at multiple pre-selected time points during the simulation. The pre-selected time points denote a time during the simulation for which a value or values of the one or more variables (are output so that the simulation can be monitored and/or utilized prior to completing simulation over the entire time window.

The processor also selects solution-dependent output data at time points in response to changes in the one or more variable values. In contrast to the pre-selected time points, solution-dependent time points are not selected prior to running the simulation, but are instead automatically generated in response to one or more variable values satisfying a selected criteria. The criteria include a rate of change of the one or more variables, and may additionally include a threshold value of the one or more variables, or a value of a mathematical operation performed on the one or more variables. The one or more variables may be periodically or continuously compared to the selected criteria, and when a variable satisfies the criteria, an associated time point (or range) is selected and the values associated with that time point are automatically output to a user. The user may be a human user or another processor or device. Time points selected for output data (whether pre-selected or solution-dependent) are referred to herein as "time stamps" or "time marks."

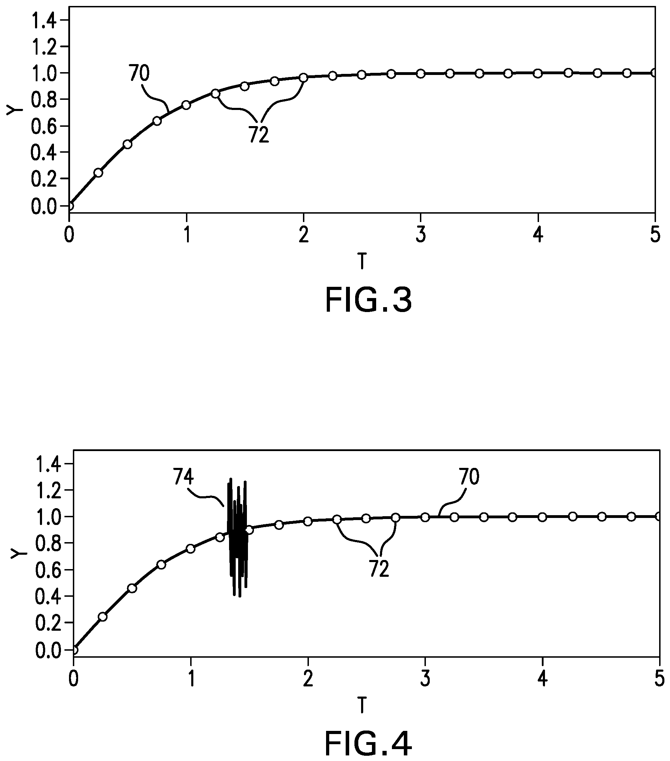

FIGS. 3 and 4 illustrate examples of pre-selected time marks associated with a numerical forward simulation that solves partial differential equations to advance the initial state of a system through time. In this example, the simulation calculates solution data as values of a variable (Y) representing a state of the simulated system as a function of time (t). The values of the variable Y relative to time are shown as a curve 70. Fixed time marks 72 are selected prior to running the simulation according to various criteria, such as the number or frequency of time steps (e.g. output in N equally spaced marks or output every Nth step) or the simulation time (e.g. output on specific time marks or output every time a certain model time has passed). In these examples, the time marks 72 are pre-selected at constant time intervals, so that a portion of the solution data is output at each time mark.

The pre-selected time marks 72 may be sufficient for simulations of physical systems that exhibit no extreme dynamical behavior, i.e. systems in which the state only varies evenly or predictably. For example, the variable Y of FIG. 3 varies according to a predictable and gradual curve without any highly dynamic events.

However, an approach that utilizes fixed time marks may not be sufficient to capture highly dynamic behaviors in a timely fashion. The highly dynamic behavior (e.g., relatively rapid and/or extreme changes that occur over a smaller time frame than intervals between pre-selected time marks) is often of interest, thus simulation outputs that focus on these variations without extraneous data may be very useful, e.g., to allow for identification and analysis of such behavior in as little time as possible, which allows a user or system to rapidly respond to predictions related to such behaviors if desired.

For example, the variable Y in some instances may exhibit highly dynamic behavior corresponding to state variations that may be of interest. Such behavior can occur during a very small time window, and the exact occurrence of such behavior often cannot be known beforehand. An example of a highly dynamic event or events is shown in FIG. 4. In this example, highly dynamic variations 74 in the variable Y are shown that occur over one or more small time windows relative to intervals between pre-selected time marks. The fixed time marks do not capture the dynamic episode of the simulated system. This can be disadvantageous for a number or reasons. First, the dynamic behavior may occur prior to a subsequent time mark, which would result in data being output at a significant time after the dynamic event occurs and could result in missing the event entirely. Second, the time window of the dynamic event may be significantly smaller than the interval(s) between pre-selected time marks, and thus capturing the event would require outputting large portions or the entire solution, which would result in an unnecessarily large amount of data being output that would require processing or analysis.

For example, in order to capture the simulation output during these highly dynamic moments, one can either capture all simulation output between pre-selected time marks (which can result in generating a potentially large amount of useless data) or run a simulation a second time after the relevant time window has been identified (which wastes computing power and time).

Embodiments described herein address the disadvantages of pre-selected and/or constant time marks. The processor is configured to generate time marks during the simulation time that are not pre-selected, but are rather selected in response to the occurrence of highly dynamic variations or events. These time marks are dependent on the actual variations that occur during the simulation, and are referred to herein as "solution-dependent time marks."

Highly dynamic events are detected by comparing a rate of change of one or more solution variables to a selected criterion or criteria over the course of the simulation. The criteria include)a selected rate of change of the variable(s), and may additionally include a threshold value of the variable(s), a threshold statistical value (e.g., an average or running average), a selected statistical distribution, a result of a mathematical operation on one or more values of the variable(s) or any other criteria sufficient to detect a significant change in the variable(s) that would not otherwise be captured using pre-selected time marks.

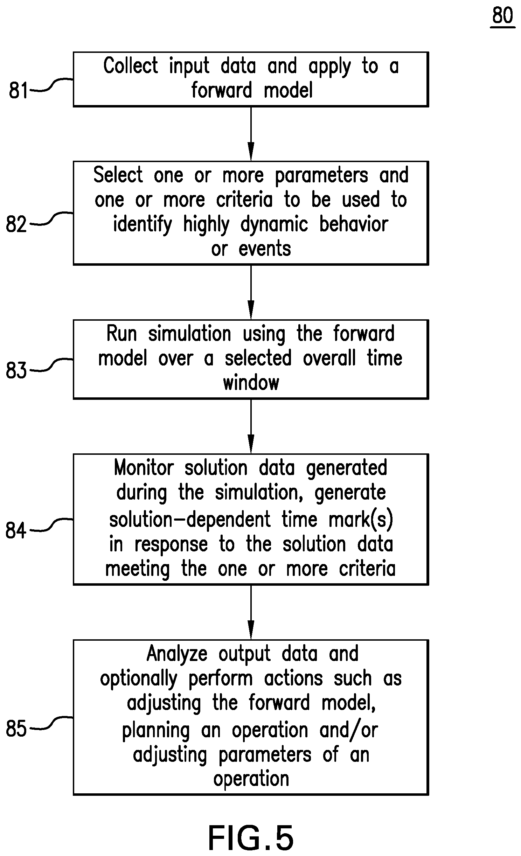

FIG. 5 shows an embodiment of a method 80 that includes various aspects of simulating or modeling a dynamic system. The method may be used in conjunction with any numerical forward models. Examples of simulations and models used in the energy industry are discussed above, however the method 80 is not limited to the simulations and models described herein. The method 80 may be performed on any suitable processor, processing device and/or network (e.g., the processing unit 12 or surface processing unit 66) or components thereof. The method 80 includes one or more stages 81-85. In one embodiment, the method 80 includes the execution of all of stages 81-85 in the order described. However, certain stages may be omitted, stages may be added, or the order of the stages changed.

In the first stage 81, input data is collected for use in a forward model or simulation. Input data includes any data or information used to build the model.

For energy industry operations such as stimulation and/or production operations, examples of input data include formation properties (taken from measurements of a current or similar formation), equipment setup information, injection fluid properties, known or estimated downhole fluid properties and expected operational parameters (e.g., injection fluid type, flow rate and pressure).

In the second stage 82, one or more variables calculated using the forward model are selected for use in calculating solution-dependent time marks, and one or more criteria are selected for detection of highly dynamic behavior.

Any suitable variable or combination of variables may be selected to allow determination of when a highly dynamic event occurs. The choice of variable may depend on the model at hand; rates of energy (kinematic or dissipation) may likely be relevant for a multitude of models. For example, for production models, a selected variable or combination of variables can include production pressure and flow rate, production volumes (e.g., barrels per day), downhole pressure, permeability and/or others. For fracturing models, a selected variable or combination of variables can include damage, strain, volume, permeability and/or others.

The variable can be a primitive variable (i.e., an unknown in the partial differential equation). In addition, the variable can be derived from one or more simulation variables, e.g., by summation or averaging or other mathematical operations.

The one or more criteria are selected to allow for detection of a change in a variable that occurs over a small time window relative to the overall time of a simulation and/or relative to a time interval between pre-selected time marks. The one or more criteria include a rate of change of the variable.

In one embodiment, the one or more criteria are the absolute value of the derivative of the variable, which is calculated continuously or periodically during the simulation (e.g., at each time step of the simulation). The absolute value is compared to a pre-determined threshold value to determine whether a highly dynamic event has occurred.

In the third stage 83, the simulation is executed, and solution data is generated. The solution data is any information or data relating to properties of the system modeled, and include a number of variables including the selected variable or combination of variables discussed above. The solution data may be generated over any time period, such as a pre-selected or variable time window. For example, the simulation is executed and stopped at a subsequent time point that is not pre-selected but may be dependent on one or more factors or conditions. The simulation may be stopped based on the results of the simulation and/or simulation data generated at one or more pre-selected or solution-dependent time marks. For example, the simulation may be stopped in response to the solution data and/or operator experience indicating that continued simulation would not bring further meaningful data or that further significant change is not expected.

In the fourth stage 84, the solution data is monitored to determine whether a highly dynamic event has occurred. The solution data is compared to the one or more criteria during execution. If a variable value or rate of change exceeds a threshold or meets the selected one or more criteria, a solution-dependent time mark is generated for the time at which the dynamic event occurred, and solution data at least at the time denoted by the time mark is output to a user (e.g., human and/or processor) as output data. The output data may be a single value of each selected variable at the time mark, or a range of values over a time period associated with the time mark. For example, the output data may include results occurring between the current solution-dependent time mark and an immediately preceding time mark (pre-selected or solution-dependent). In another example, the output data includes results occurring during any selected time period surrounding or terminating at the solution-dependent time mark.

In the fifth stage 85, the output data is analyzed and various actions are optionally performed. For example, the highly dynamic event is analyzed and aspects of a planned operation (e.g., stimulation and/or production) are adjusted as necessary. In another example, the forward model is adjusted, updated or calibrated if desired based on the highly dynamic event. In yet another example, if the simulation is executed during an operation, (e.g., using real time measurement data inputted to the model), operational parameters such as injection rate or pressure can be adjusted in response to the highly dynamic event (e.g., to avoid an event predicted by the simulation).

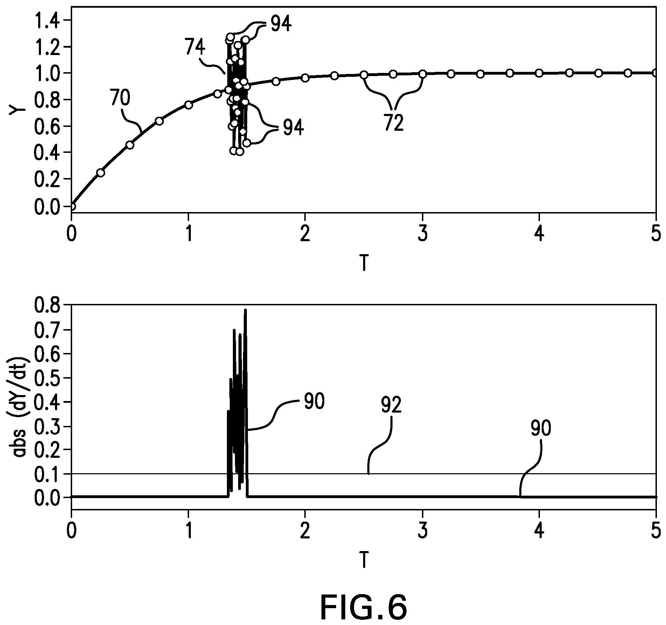

An example of an application of the method 80 is discussed with reference to FIG. 6. In this example, a simulation of a dynamic system such as a system for performing hydraulic fracturing and/or hydrocarbon production is performed using a fracturing or production model. The model may calculate multiple variables, such as pressure, fluid flow, fluid volume, permeability and others. A variable Y is selected, which may be a single variable or a combination of variables.

Fixed time stamps 72 are entered to the model for automatic generation of output data at each time represented by a respective fixed time stamp 72. Typically, the fixed time stamps represent substantially equal time intervals, but are not so limited.

In addition, one or more criteria are selected to define a highly dynamic change in variable values over time. In this example, the derivative of the variable Y is calculated as the solution data (represented by the curve 70) is generated, and the derivative is compared to a selected threshold.

As shown in FIG. 6, the variable Y generally increases and then gradually flattens out, but is interrupted by a highly dynamic event (or series of events) represented by strong fluctuations in the variable Y. The highly dynamic event may not be able to be predicted beforehand to enable pre-selecting a time mark for that event.

During the model run, the derivative of Y is calculated periodically (e.g., repeatedly over small time intervals relative to the pre-selected mark intervals) or substantially continuously (e.g., at each simulation time step) as solution data is calculated. The values of the derivative of Y at multiple times during the time window are shown as curve 90. The values of curve 90 are compared to a threshold value 92. At each point in time for which the derivative exceeds the threshold value 92, a solution-dependent time mark 94 is generated and the Y value (or set of Y values) is output. As shown in FIG. 6, a plurality of highly dynamic fluctuations occur in rapid succession, resulting in a plurality of corresponding outputs. Thus, data is output for each fluctuation over a small time window that captures the fluctuation without extraneous data unrelated to that fluctuation. Each fluctuation is captured by a solution-dependent output. Using only the pre-selected time marks, output at each time mark would not capture the dynamic events.

Although the embodiment of the method of FIG. 6 is discussed in conjunction with comparing a rate of change of a variable, the method is not so limited. The criteria may be a value of the rate of change as discussed above, or may be another criteria, such as a threshold value of the variable or the result of a mathematical or statistical operation performed on the variable. For example, the highly dynamic events shown in FIG. 6 may be detected by comparing the values of Y to a threshold value (e.g., 1.01 or greater than 1). In response to detecting the value of Y meeting or exceeding the threshold, a solution dependent time mark and the corresponding variable value (or values) is output.

The systems and methods described herein present numerous advantages relative to prior art systems and techniques. Embodiments described herein overcome inefficiencies inherent in prior art methods of detecting and analyzing highly dynamic events.

For example, solution-dependent output time marks according to embodiments described herein have a crucial benefit over prior art methods when highly dynamic systems are simulated, because the simulation output is automatically obtained at time points of interest. In the absence of such solution-dependent time marks, either too many time steps must be output (which can quickly fill any hard disk for 3D models), or not enough will be output, which requires the simulation to be executed again in the hope of better time mark selection. This is very time-consuming, wastes computing power and, for commercial codes, wastes licensing time. In addition, without output at the appropriate times using embodiments described herein, dynamic behavior can be missed altogether.

In support of the teachings herein, various analyses and/or analytical components may be used, including digital and/or analog systems. The system may have components such as a processor, storage media, memory, input, output, communications link (wired, wireless, pulsed mud, optical or other), user interfaces, software programs, signal processors (digital or analog) and other such components (such as resistors, capacitors, inductors and others) to provide for operation and analyses of the apparatus and methods disclosed herein in any of several manners well-appreciated in the art. It is considered that these teachings may be, but need not be, implemented in conjunction with a set of computer executable instructions stored on a computer readable medium, including memory (ROMs, RAMs), optical (CD-ROMs), or magnetic (disks, hard drives), or any other type that when executed causes a computer to implement the method of the present invention. These instructions may provide for equipment operation, control, data collection and analysis and other functions deemed relevant by a system designer, owner, user or other such personnel, in addition to the functions described in this disclosure.

Further, various other components may be included and called upon for providing aspects of the teachings herein. For example, a sample line, sample storage, sample chamber, sample exhaust, pump, piston, power supply (e.g., at least one of a generator, a remote supply and a battery), vacuum supply, pressure supply, refrigeration (i.e., cooling) unit or supply, heating component, motive force (such as a translational force, propulsional force or a rotational force), magnet, electromagnet, sensor, electrode, transmitter, receiver, transceiver, controller, optical unit, electrical unit or electromechanical unit may be included in support of the various aspects discussed herein or in support of other functions beyond this disclosure.

One skilled in the art will recognize that the various components or technologies may provide certain necessary or beneficial functionality or features. Accordingly, these functions and features as may be needed in support of the appended claims and variations thereof, are recognized as being inherently included as a part of the teachings herein and a part of the invention disclosed.

While the invention has been described with reference to exemplary embodiments, it will be understood by those skilled in the art that various changes may be made and equivalents may be substituted for elements thereof without departing from the scope of the invention. In addition, many modifications will be appreciated by those skilled in the art to adapt a particular instrument, situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A computer implemented method (80) of simulating a dynamic system (28), the method (80) comprising:
receiving input data related to the dynamic system and applying the input data to a numerical forward model;
executing the forward model to simulate the dynamic system (28) and generate solution data values;
during execution of the forward model, comparing the solution data values to a pre-selected criterion;
in response to at least one solution data value satisfying the pre-selected criterion, automatically generating a time mark (92) for a time at which the at least one solution data value satisfies the pre-selected criterion and automatically outputting one or more solution data values associated with the generated time mark (92);
wherein comparing includes calculating a rate of change of the solution data values, the pre-selected criterion including a threshold rate of change;
wherein the dynamic system (28) includes properties of at least one of a borehole (46) and an earth formation (42) during an energy industry operation;
and wherein the energy industry operation includes injection of fluid into at least one of the borehole (46) and the earth formation (42);
the method further comprising adjusting one or more operational parameters of the energy industry operation based on the one or more solution data values associated with the generated time mark (92).

2. The method (80) of claim 1, wherein executing the forward model includes outputting solution data values at a plurality of fixed times designated by a plurality of pre-set time marks (72).

3. The method (80) of claim 2, wherein the generated time mark (92) designates a time value that is different than the time values associated with the pre-set time marks (72).

4. The method (80) of claim 2 or 3, wherein outputting one or more solution data values includes outputting results calculated over a time period defined by the generated time mark (92) and an immediately preceding pre-set time mark (92).

5. The method (80) of claim 2, 3, or 4, wherein the threshold rate of change is a rate of change of the solution data values over a time window that is less than a time window defined by successive pre-set time marks (72).

6. The method (80) of any preceding claim, wherein the pre-selected criterion is the absolute value of a time derivative of the solution data values.

7. The method of any preceding claim, wherein the one or more operational parameter includes as least one of injection fluid type, injection fluid flow rate, injection fluid pressure, injection fluid pumping schemes or injection operational times.

8. A system (10) for simulating a dynamic system (28), the system (10) including:
a data collection device configured to receive input data related to the dynamic system (28); and
a processing device configured to perform a method (80) including:
applying the input data to a numerical forward model;
executing the forward model to simulate the dynamic system (28) and generate solution data values;
during execution of the forward model, comparing the solution data values to a pre-selected criterion; and
in response to at least one solution data value satisfying the pre-selected criterion, automatically generating a time mark (92) for a time at which the at least one solution data value satisfied the pre-selected criterion and automatically outputting the one or more solution data values associated with the time mark (92);
wherein comparing includes calculating a rate of change of the solution data values, the pre-selected criterion including a threshold rate of change; and
wherein the dynamic system (28) includes properties of at least one of a borehole (46) and an earth formation (42) during an energy industry operation;
and wherein the energy industry operation includes injection of fluid into at least one of the borehole (46) and the earth formation (42);
the method further comprising adjusting one or more operational parameters of the energy industry operation based on the one or more solution data values associated with the generated time mark (92).

9. The system (10) of claim 8 wherein executing the forward model includes outputting solution data values at a plurality of fixed times designated by a plurality of pre-set time marks (72).

10. The system (10) of claim 9, wherein the generated time mark (92) designates a time value that is different than the time values associated with the pre-set time marks (72).

11. The system (10) of claim 9 or 10, wherein outputting one or more solution data values includes outputting results calculated over a time period defined by the generated time mark (92) and an immediately preceding pre-set time mark (92).

12. The system (10) of any of claims 9-11, wherein the one or more operational parameter includes as least one of injection fluid type, injection fluid flow rate, injection fluid pressure, injection fluid pumping schemes or injection operational times.

## Patentansprüche

1. Computerimplementiertes Verfahren (80) zum Simulieren eines dynamischen Systems (28), das Verfahren (80) umfassend:
Empfangen von Eingabedaten, die sich auf das dynamische System beziehen, und Anwenden der Eingabedaten auf ein numerisches Vorwärtsmodell;
Ausführen des Vorwärtsmodells, um das dynamische System (28) zu simulieren und Lösungsdatenwerte zu erzeugen;
während einer Ausführung des Vorwärtsmodells Vergleichen der Lösungsdatenwerte mit einem vorab ausgewählten Kriterium;
als Reaktion darauf, dass mindestens ein Lösungsdatenwert das vorab ausgewählte Kriterium erfüllt, automatisches Erzeugen einer Zeitmarke (92) für einen Zeitpunkt, zu dem der mindestens eine Lösungsdatenwert das vorab ausgewählte Kriterium erfüllt, und automatisches Ausgeben eines oder mehrerer Lösungsdatenwerte, die mit der erzeugten Zeitmarke (92) verknüpft sind;
wobei das Vergleichen ein Berechnen einer Änderungsrate der Lösungsdatenwerte einschließt, das vorab ausgewählte Kriterium einschließlich einer Schwellenänderungsrate;
wobei das dynamische System (28) Eigenschaften mindestens eines von einem Bohrloch (46) und einer Erdformation (42) während eines Energieindustriebetriebs einschließt;
und wobei der Energieindustriebetrieb eine Injizierung von Fluid in mindestens eines von dem Bohrloch (46) und der Erdformation (42) einschließt;
das Verfahren ferner umfassend ein Anpassen eines oder mehrerer Betriebsparameter des Energieindustriebetriebs basierend auf dem einen oder den mehreren Lösungsdatenwerten, die mit der erzeugten Zeitmarke (92) verknüpft sind.

2. Verfahren (80) nach Anspruch 1, wobei das Ausführen des Vorwärtsmodells das Ausgeben von Lösungsdatenwerten zu einer Vielzahl von festen Zeitpunkten, die durch eine Vielzahl von voreingestellten Zeitmarken (72) festgelegt werden, einschließt.

3. Verfahren (80) nach Anspruch 2, wobei die erzeugte Zeitmarke (92) einen Zeitwert festlegt, der sich von den Zeitwerten, die mit den voreingestellten Zeitmarken (72) verknüpft sind, unterscheidet.

4. Verfahren (80) nach Anspruch 2 oder 3, wobei das Ausgeben eines oder mehrerer Lösungsdatenwerte das Ausgeben von Ergebnissen einschließt, die über einen Zeitraum, der durch die erzeugte Zeitmarke (92) und eine unmittelbar vorangehende voreingestellte Zeitmarke (92) definiert ist, berechnet werden.

5. Verfahren (80) nach Anspruch 2, 3 oder 4, wobei die Schwellenänderungsrate eine Änderungsrate der Lösungsdatenwerte über ein Zeitfenster ist, das kleiner als ein Zeitfenster ist, das durch aufeinanderfolgende voreingestellte Zeitmarken (72) definiert ist.

6. Verfahren (80) nach einem der vorstehenden Ansprüche, wobei das vorab ausgewählte Kriterium der Absolutwert einer zeitlichen Ableitung der Lösungsdatenwerte ist.

7. Verfahren nach einem der vorstehenden Ansprüche, wobei der eine oder die mehreren Betriebsparameter mindestens eines von einer Art eines Injizierungsfluids, einer Durchflussrate des Injizierungsfluids, einem Druck des Injizierungsfluids, Pumpschemata des Injizierungsfluids oder Injektionsbetriebszeiten einschließen.

8. System (10) zum Simulieren eines dynamischen Systems (28), das System (10) einschließlich:
einer Datenerfassungsvorrichtung, die konfiguriert ist, um Eingabedaten, die sich auf das dynamische System (28) beziehen, zu empfangen; und
einer Verarbeitungsvorrichtung, die konfiguriert ist, um ein Verfahren (80) durchzuführen, einschließlich:
Anwenden der Eingabedaten auf ein numerisches Vorwärtsmodell;
Ausführen des Vorwärtsmodells, um das dynamische System (28) zu simulieren und Lösungsdatenwerte zu erzeugen;
während der Ausführung des Vorwärtsmodells Vergleichen der Lösungsdatenwerte mit einem vorab ausgewählten Kriterium; und
als Reaktion darauf, dass mindestens ein Lösungsdatenwert das vorab ausgewählte Kriterium erfüllt, automatisches Erzeugen einer Zeitmarke (92) für einen Zeitpunkt, zu dem der mindestens eine Lösungsdatenwert das vorab ausgewählte Kriterium erfüllte, und automatisches Ausgeben des einen oder der mehreren Lösungsdatenwerte, die mit der Zeitmarke (92) verknüpft sind;
wobei das Vergleichen das Berechnen einer Änderungsrate der Lösungsdatenwerte einschließt, das vorab ausgewählte Kriterium einschließlich einer Schwellenänderungsrate; und
wobei das dynamische System (28) Eigenschaften mindestens eines von einem Bohrloch (46) und einer Erdformation (42) während eines Energieindustriebetriebs einschließt;
und wobei der Energieindustriebetrieb die Injizierung von Fluid in mindestens eines von dem Bohrloch (46) und der Erdformation (42) einschließt;
das Verfahren ferner umfassend das Anpassen eines oder mehrerer Betriebsparameter des Energieindustriebetriebs basierend auf dem einen oder den mehreren Lösungsdatenwerten, die mit der erzeugten Zeitmarke (92) verknüpft sind.

9. System (10) nach Anspruch 8, wobei das Ausführen des Vorwärtsmodells das Ausgeben von Lösungsdatenwerten zu einer Vielzahl von festen Zeitpunkten, die durch eine Vielzahl von voreingestellten Zeitmarken (72) festgelegt werden, einschließt.

10. System (10) nach Anspruch 9, wobei die erzeugte Zeitmarke (92) einen Zeitwert festlegt, der sich von den Zeitwerten, die mit den voreingestellten Zeitmarken (72) verknüpft sind, unterscheidet.

11. System (10) nach Anspruch 9 oder 10, wobei das Ausgeben eines oder mehrerer Lösungsdatenwerte das Ausgeben von Ergebnissen einschließt, die über einen Zeitraum, der durch die erzeugte Zeitmarke (92) und eine unmittelbar vorangehende voreingestellte Zeitmarke (92) definiert ist, berechnet werden.

12. System (10) nach einem der Ansprüche 9 bis 11, wobei der eine oder die mehreren Betriebsparameter mindestens eines von der Art des Injizierungsfluids, der Durchflussrate des Injizierungsfluids, dem Druck des Injizierungsfluids, Pumpschemata des Injizierungsfluids oder Injektionsbetriebszeiten einschließen.

## Revendications

1. Procédé implémenté par ordinateur (80) de simulation d'un système dynamique (28), le procédé (80) comprenant :
la réception de données d'entrée apparentées au système dynamique et l'application des données d'entrée à un modèle direct numérique ;
l'exécution du modèle direct pour simuler le système dynamique (28) et générer des valeurs de données de solution ;
pendant l'exécution du modèle direct, la comparaison des valeurs de données de solution à un critère présélectionné ;
en réponse à au moins une valeur de données de solution respectant le critère présélectionné, la génération automatique d'un repère temporel (92) pour un temps au niveau duquel l'au moins une valeur de données de solution respecte le critère présélectionné et la sortie automatique d'une ou plusieurs valeurs de données de solution associées au repère temporel (92) généré ;
dans lequel la comparaison comporte le calcul d'un taux de changement des valeurs de données de solution, le critère présélectionné comportant un taux seuil de changement ;
dans lequel le système dynamique (28) comporte des propriétés d'au moins l'un parmi un trou de forage (46) et une formation terrestre (42) pendant une opération industrielle énergétique ;
et dans lequel l'opération industrielle énergétique comporte une injection de fluide dans au moins l'un du trou de forage (46) et de la formation terrestre (42) ;
le procédé comprenant en outre l'ajustement d'un ou plusieurs paramètres opérationnels de l'opération industrielle énergétique en fonction de la ou des valeurs de données de solution associées au repère temporel (92) généré.

2. Procédé (80) selon la revendication 1, dans lequel l'exécution du modèle direct comporte la sortie de valeurs de données de solution au niveau d'une pluralité de temps fixes désignés par une pluralité de repères temporels préétablis (72).

3. Procédé (80) selon la revendication 2, dans lequel le repère temporel (92) généré désigne une valeur de temps qui est différente des valeurs de temps associées aux repères temporels préétablis (72).

4. Procédé (80) selon la revendication 2 ou 3, dans lequel la sortie d'une ou plusieurs valeurs de données de solution comporte la sortie de résultats calculés au cours d'un laps de temps défini par le repère temporel (92) généré et un repère temporel (92) préétabli qui précède immédiatement.

5. Procédé (80) selon la revendication 2, 3 ou 4, dans lequel le taux seuil de changement est un taux de changement des valeurs de données de solution au cours d'une fenêtre temporelle qui est inférieure à une fenêtre temporelle définie par des repères temporels préétablis (72) successifs.

6. Procédé (80) selon l'une quelconque revendication précédente, dans lequel le critère présélectionné est la valeur absolue d'une dérivée de temps des valeurs de données de solution.

7. Procédé selon l'une quelconque revendication précédente, dans lequel le ou les paramètres opérationnels comportent au moins l'un parmi un type de fluide d'injection, un débit d'écoulement de fluide d'injection, une pression de fluide d'injection, des schémas de pompage de fluide d'injection ou des temps opérationnels d'injection.

8. Système (10) destiné à simuler un système dynamique (28), le système (10) comportant :
un dispositif de collecte de données configuré pour recevoir des données d'entrée apparentées au système dynamique (28) ; et
un dispositif de traitement configuré pour mettre en œuvre un procédé (80) comportant :
l'application des données d'entrée à un modèle direct numérique ;
l'exécution du modèle direct pour simuler le système dynamique (28) et générer des valeurs de données de solution ;
pendant l'exécution du modèle direct, la comparaison des valeurs de données de solution à un critère présélectionné ; et
en réponse à au moins une valeur de données de solution respectant le critère présélectionné, la génération automatique d'un repère temporel (92) pour un temps au niveau duquel l'au moins une valeur de données de solution a respecté le critère présélectionné et la sortie automatique de la ou des valeurs de données de solution associées au repère temporel (92) ;
dans lequel la comparaison comporte le calcul d'un taux de changement des valeurs de données de solution, le critère présélectionné comportant un taux seuil de changement ; et
dans lequel le système dynamique (28) comporte des propriétés d'au moins l'un parmi un trou de forage (46) et une formation terrestre (42) pendant une opération industrielle énergétique ;
et dans lequel l'opération industrielle énergétique comporte une injection de fluide dans au moins l'un du trou de forage (46) et de la formation terrestre (42) ;
le procédé comprenant en outre l'ajustement d'un ou plusieurs paramètres opérationnels de l'opération industrielle énergétique en fonction de la ou des valeurs de données de solution associées au repère temporel (92) généré.

9. Système (10) selon la revendication 8, dans lequel l'exécution du modèle direct comporte la sortie de valeurs de données de solution au niveau d'une pluralité de temps fixes désignés par une pluralité de repères temporels préétablis (72).

10. Système (10) selon la revendication 9, dans lequel le repère temporel (92) généré désigne une valeur de temps qui est différente des valeurs de temps associées aux repères temporels préétablis (72).

11. Système (10) selon la revendication 9 ou 10, dans lequel la sortie d'une ou plusieurs valeurs de données de solution comporte la sortie de résultats calculés au cours d'un laps de temps défini par le repère temporel (92) généré et un repère temporel (92) préétabli qui précède immédiatement.

12. Système (10) selon l'une quelconque des revendications 9 à 11, dans lequel le ou les paramètres opérationnels comportent d'au moins l'un parmi un type de fluide d'injection, un débit d'écoulement de fluide d'injection, une pression de fluide d'injection, des schémas de pompage de fluide d'injection ou des temps opérationnels d'injection.
